# EUROPEAN PATENT APPLICATION

(11) **EP 3 395 430 A1**
(43) Date of publication of application: **31.10.2018**
(21) Application number: 16838025.1
(22) Date of filing: 22.12.2016
(51) Int. Cl.: B01D 61/00, B01D 61/58, C02F 1/44, B01D 71/12

(54) **METHOD FOR CONTROLLING A COMBINED SYSTEM OF FORWARD OSMOSIS AND NANOFILTRATION OR REVERSE OSMOSIS**

(30) Priority: 22.12.2015 ES 201531881
(71) Applicant: Acciona Agua, S.A., 28108 Alcobendas (Madrid) (ES)
(72) Inventor: DE LA TORRE GARCÍA, Teresa, 28108 Alcobendas (Madrid) (ES); CORZO GARCÍA, Beatriz, 28108 Alcobendas (Madrid) (ES); MALFEITO SÁNCHEZ, Jorge, 28108 Alcobendas (Madrid) (ES); MICO RECHE, Mª del Mar, 28108 Alcobendas (Madrid) (ES); MOLINA FERNANDEZ, Adolfo, 28108 Alcobendas (Madrid) (ES)
(74) Representative: Pons Ariño, Angel
(86) International application number: PCT/ES2016/070925
(87) International publication number: WO 2017/109260

(57) **Abstract**

Method for treating water by nanofiltration or reverse osmosis with a forward osmosis system as pretreatment which comprises a control system by means of which the flow difference between the inlet and the outlet of the membrane at any of the two sides of the membrane is regulated by means of a system for adding a solution with an osmotic pressure lower than or greater than the water to be treated.

## Description

### DESCRIPTION

The present invention relates to a method for dosing a draw solution (DS) in order to maintain the flow of nanofiltered water produced by a system for forward osmosis (FO) and nanofiltration (NF) or reverse osmosis (RO) by means of the difference in the measurement of the flow of DS or the flow of feed water at the inlet and at the outlet of the FO system or by means of the difference in the measurement of the flow of the feed water at the inlet and at the outlet of the FO system.

### STATE OF THE ART

In a water production plant, it is vitally important to supply a constant flow of water to the final user. Thus, the permeate flow, that is to say, the flow of product water, is the variable to be fixed in a process of a combined system of forward osmosis and nanofiltration or reverse osmosis.

To this end, the control system consists of adding more or less draw solution to the other side of the membrane in order to increase or decrease the difference of osmotic pressure. Hitherto, the control systems described for FO systems have been based on fixing the electric conductivity (ms/cm) of the DS (see for example Alturki et al. Bioresource Technology 2012, 113, 201-206; Chen et al. nd. Eng. Chem. Res., 2014, 53, 16170-16175; and Zhang et al. Journal of Membrane Science 2012, 403-404, 8-14). Thus, when the conductivity drops below a specific value due to dilution with the permeate, the dosing of DS is activated in order to re-establish the conductivity. However, there is no direct relation between the electric conductivity of the DS (ms/cm) and the flow of permeate obtained (m³/s) since the flow of permeate obtained depends on the conductivity of the water to be purified, but also on other factors such as the layer of dirt of the membrane, the throughput through the membrane (Akther et al. Chemical Engineering Journal 2015, 281, 502-522) and on the composition of the DS which may change with time. Therefore, control based on the conductivity does not allow a constant flow of product water to be achieved.

Therefore, it would be desirable to provide a method for forward osmosis which allows the control of the obtained nanofiltered/osmotized water flow and, in addition, for the steps of nanofiltration/reverse osmosis and forward osmosis of said method to be stable by means of their series regulation.

### DESCRIPTION OF THE INVENTION

In a first aspect, the present invention relates to a method for filtering water in a forward osmosis system which comprises a step for dosing a draw solution characterized by measuring the flow of the draw solution or the flow of feed water at the inlet and at the outlet of the system, wherein:
i) when the difference between the flow of the draw solution or of the feed water at the inlet and at the outlet of the system is less than between 1% and 10% of the flow, the dosing of concentrated draw solution is produced; or
ii) when the difference between the flow of the draw solution or of the feed water at the inlet and at the outlet of the system is greater than between 1% and 10% of the flow, the dosing of the diluted draw solution is produced, characterized in that the flow, to which the steps (i) and (ii) refer, is between 2 and 15 l/h per square meter of membrane surface.

In another embodiment, the invention relates to the method previously defined, wherein the draw solution is selected from a high molecular weight polymer, fertilizers, inorganic salts and organic salts.

In another embodiment, the invention relates to the method previously defined, wherein the draw solution is selected from sodium polyacrylate, magnesium sulfate, calcium disodium EDTA, magnesium disodium EDTA, calcium nitrate, magnesium nitrate, calcium acetate and magnesium acetate, sodium chloride, calcium chloride, magnesium chloride, sodium pyrophosphate, potassium formate, polyacrylamide, polyethylene glycol, polyvinyl alcohol, dextran.

In another embodiment, the invention relates to the method previously defined, wherein the concentrated draw solution has a concentration of between 10 g/L and 500 g/L.

In another embodiment, the invention relates to the method previously defined, wherein the diluted draw solution has a concentration of between 5 g/L and 400 g/L.

In another embodiment, the invention relates to the method previously defined, wherein the forward osmosis system comprises a filtration membrane selected from thin film composite (TFC) or cellulose triacetate (CTA).

In another embodiment, the invention relates to the method previously defined, wherein the filtration membrane is configured as hollow fiber, flat plate or spiral wound.

In another embodiment, the invention relates to the method previously defined, wherein the membrane is TFC configured as flat plate.

In another embodiment, the invention relates to the method previously defined, wherein:
the draw solution is selected from a high molecular weight polymer, fertilizers, inorganic salts and organic salts; and
the concentrated draw solution has a concentration of between 10 g/L and 500 g/L.

In another embodiment, the invention relates to the method previously defined, wherein:
the draw solution is selected from a high molecular weight polymer, fertilizers, inorganic salts and organic salts; and
the diluted draw solution has a concentration of between 5 g/L and 400 g/L.

In another embodiment, the invention relates to the method previously defined, wherein
the draw solution is selected from a high molecular weight polymer, fertilizers, inorganic salts and organic salts;
the concentrated draw solution has a concentration of between 10 g/L and 500 g/L; and
the diluted draw solution has a concentration of between 5 g/L and 400 g/L.

In another embodiment, the invention relates to the method previously defined, wherein:
the draw solution is selected from sodium polyacrylate, magnesium sulfate, calcium disodium EDTA, magnesium disodium EDTA, calcium nitrate, magnesium nitrate, calcium acetate and magnesium acetate, sodium chloride, calcium chloride, magnesium chloride, sodium pyrophosphate, potassium formate, polyacrylamide, polyethylene glycol, polyvinyl alcohol, dextran; and
the concentrated draw solution has a concentration of between 10 g/L and 500 g/L.

In another embodiment, the invention relates to the method previously defined, wherein
the draw solution is selected from sodium polyacrylate, magnesium sulfate, calcium disodium EDTA, magnesium disodium EDTA, calcium nitrate, magnesium nitrate, calcium acetate and magnesium acetate, sodium chloride, calcium chloride, magnesium chloride, sodium pyrophosphate, potassium formate, polyacrylamide, polyethylene glycol, polyvinyl alcohol, dextran; and
the diluted draw solution has a concentration of between 5 g/L and 400 g/L.

In another embodiment, the invention relates to the method previously defined, wherein:
the draw solution is selected from sodium polyacrylate, magnesium sulfate, calcium disodium EDTA, magnesium disodium EDTA, calcium nitrate, magnesium nitrate, calcium acetate and magnesium acetate, sodium chloride, calcium chloride, magnesium chloride, sodium pyrophosphate, potassium formate, polyacrylamide, polyethylene glycol, polyvinyl alcohol, dextran;
the concentrated draw solution has a concentration of between 10 g/L and 500 g/L; and
the diluted draw solution has a concentration of between 5 g/L and 400 g/L.

In another embodiment, the invention relates to the method previously defined, wherein
the draw solution is selected from a high molecular weight polymer, fertilizers, inorganic salts and organic salts; and
the forward osmosis system comprises a filtration membrane selected from thin film composite (TFC) or cellulose triacetate (CTA) and preferably wherein the membrane is TFC and is configured as flat plate.

In another embodiment, the invention relates to the method previously defined, wherein:
the draw solution is selected from a high molecular weight polymer, fertilizers, inorganic salts and organic salts; and
the forward osmosis system comprises a filtration membrane selected from thin film composite (TFC) or cellulose triacetate (CTA) and preferably wherein the filtration membrane is configured as hollow fiber, flat plate or spiral and more preferably wherein the membrane is TFC and is configured as flat plate.

In another embodiment, the invention relates to the method previously defined, wherein:
the draw solution is selected from sodium polyacrylate, magnesium sulfate, calcium disodium EDTA, magnesium disodium EDTA, calcium nitrate, magnesium nitrate, calcium acetate and magnesium acetate, sodium chloride, calcium chloride, magnesium chloride, sodium pyrophosphate, potassium formate, polyacrylamide, polyethylene glycol, polyvinyl alcohol, dextran; and
the forward osmosis system comprises a filtration membrane selected from thin film composite (TFC) or cellulose triacetate (CTA), preferably wherein the filtration membrane is configured as hollow fiber, flat plate or spiral and more preferably wherein the membrane is TFC and is configured as flat plate.

In another embodiment, the invention relates to the method previously defined, wherein:
the draw solution is selected from a high molecular weight polymer, fertilizers, inorganic salts and organic salts;
wherein the concentrated draw solution has a concentration of between 10 g/L and 500 g/L;
the diluted draw solution has a concentration of between 5 g/L and 400 g/L; and
the forward osmosis system comprises a filtration membrane selected from thin film composite (TFC) or cellulose triacetate (CTA), preferably wherein the filtration membrane is configured as hollow fiber, flat plate or spiral and more preferably wherein the membrane is TFC and is configured as flat plate.

In another embodiment, the invention relates to the method previously defined, wherein:
the draw solution is selected from sodium polyacrylate, magnesium sulfate, calcium disodium EDTA, magnesium disodium EDTA, calcium nitrate, magnesium nitrate, calcium acetate and magnesium acetate, sodium chloride, calcium chloride, magnesium chloride, sodium pyrophosphate, potassium formate, polyacrylamide, polyethylene glycol, polyvinyl alcohol, dextran;
wherein the concentrated draw solution has a concentration of between 10 g/L and 500 g/L and
the diluted draw solution has a concentration of between 5 g/L and 400 g/L; and
the forward osmosis system comprises a filtration membrane selected from thin film composite (TFC) or cellulose triacetate (CTA), preferably wherein the filtration membrane is configured as hollow fiber, flat plate or spiral and more preferably wherein the membrane is TFC and is configured as flat plate.

Throughout the present invention, the term "water filtration" relates to nanofiltration and forward osmosis, wherein both are separation processes which use semi-permeable membranes. A semi-permeable membrane is a structure which allows the passage of some compounds and not others, depending on the characteristics of the compound, such as size or charge. Nanofiltration and reverse osmosis are similar techniques which are distinguished by the type of membrane used. Nanofiltration membranes have a pore size equivalent to 0.001 to 0.0001 microns, while reverse osmosis would have a smaller equivalent pore size (< 0.0001 µm).

"Flat plate membranes" relates to flat membrane sheets supported on support plates and are used in plate and frame modules. These modules have two inlets (one for the feed water and the other for the draw solution) and two outlets, distributed at different points on the plate depending on the type of flow desired.

"Hollow fiber membranes" relate to a group of hollow tubes with small diameter (0.6 to 2 mm) which are made by membrane, wherein the water may flow either inside to outside or outside to inside.

"Spiral membranes" relate to two layers of membrane, situated in a permeate collector fabric. This membrane cover surrounds a permeate drain situated in the central position.

Thus, the differences between these three configurations lies in how the membrane is arranged:
- the flat plate membranes are sheets of flat membrane, film types;
- the spiral membranes are rolled in a spiral; and
- the hollow fiber membranes are arranged in hollow tubes.

The term "feed water" relates to the water stream to be treated. It may be sea water, brackish water, waste water, etc., that is to say, any water which is sought to be desalinized or concentrated.

The term "draw solution" (DS) relates to a fluid which has a high concentration of dissolved solute and therefore an osmotic pressure greater than the feed water stream. Due to the difference of osmotic pressures between both streams, if they are placed in contact with a semi-permeable membrane, the stream with greater osmotic pressure tends to be diluted with the aim of equaling the pressures, consequently, this stream draws the fluid towards itself. The "concentrated draw solution" is that which has still not been placed into contact by way of the semi-permeable membrane with the feed water, while the "diluted draw solution" has already been placed into contact with the feed water and has drawn part of this water towards itself, the draw solution being diluted. Examples of feed water include, amongst others:
- "high molecular weight polymers": the polymers are macromolecules formed by the bonding of smaller molecules called monomers. They are generally organic molecules with a high molecular weight. The preferred molecules should have a low molecule weight of 2 to 25 KDa. Molecules with greater molecular weight should not be considered due to their high viscosity. Examples of polymers are: sodium polyacrylate, polyacrylamide, polyethylene glycol, polyvinyl alcohol, dextran;
- "Fertilizers": is a type of substance which contains nutrients, in healthy chemical forms assimilable by the roots of plants in order to maintain or increase the content of these elements in the soil so that the plant absorbs them. Examples of fertilizer: calcium nitrate, magnesium nitrate, calcium EDTA, magnesium EDTA, magnesium sulfate, sodium pyrophosphate;
- "Organic salts": applies to the salt formed by cations (ions with positive charge) bonded to anions (ions with negative charge) by means of an ionic bond wherein the anion is mainly composed of carbon compounds, with C-C and C-H bonds. Examples being potassium formate, calcium EDTA, magnesium EDTA, calcium acetate, magnesium acetate; and
- "Inorganic salts": applies to the salt formed by cations (ions with positive charge) bonded to anions (ions with negative charge) by means of an ionic bond wherein no part contains carbon compounds with C-C and C-H bonds. Examples being magnesium sulfate, calcium nitrate, magnesium nitrate, sodium chloride, calcium chloride, magnesium chloride.

As it has been previously mentioned, owing to the method of the invention, a constant flow of water (product water, permeate flow) should be supplied. In the system, the flow of product water is the variable which is maintained fixed. To this end, new or diluted draw solution is added to one side of the forward osmosis membrane in order to increase or decrease the difference of osmotic pressure in the system and thus to modify the flow of product water. Once the flow of product water measured by the difference between the flowmeters at the inlet and outlet of the FO is within the desired range, new or diluted draw solution stops being dosed.

In addition, the process of the invention allows the osmosis and NF/RO process to be stable, that is to say, the permeate of the NF/RO is made to match the difference of flows between the inlet and the outlet of the FO so that both processes work synchronously. These two processes work in series to prevent the NF/RO stopping due to lack of water produced by FO or vice versa, to prevent the FO stopping and not producing more water. If this is not the case, there will be a time at which either the NF/RO does not have feed and is stopped since it depends on the water which the FO produces, or vice versa, a time at which the FO produces more water than the NF/RO.

In addition, the process of the invention allows the saving of product water of the system since when the flow of product water through FO increases, instead of adding product water to reduce the difference of osmotic pressure and reduce the flow of water which passes through the membrane, what is carried out in the process of the invention is adding diluted draw solution, reducing the concentration of the draw solution. Product water is thus saved.

Throughout the description and the claims, the word "comprises" and its variants do not intend to exclude other technical characteristics, additions, components or steps. For the person skilled in the art, other objects, advantages and characteristics of the invention will emerge in part from the description and in part from the practice of the invention. The following examples and figures are provided by way of illustration and do not intend to be limiting to the present invention.

### BRIEF DESCRIPTION OF THE FIGURES

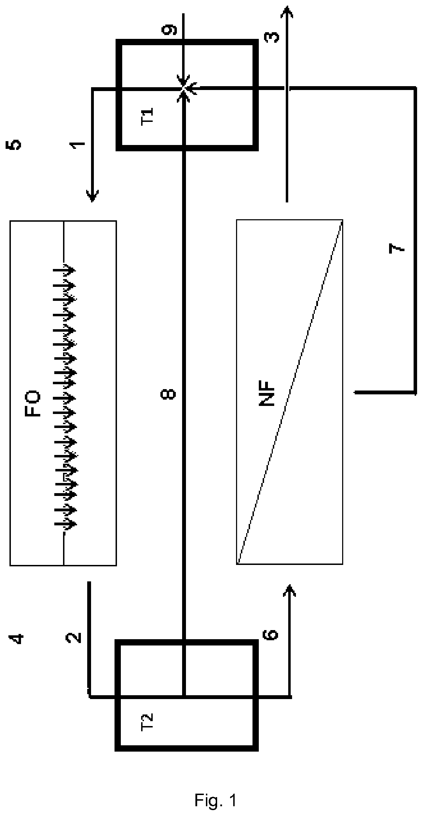

**Fig. 1** shows the diagram of the process of forward osmosis and nanofiltration. **FO:** forward osmosis membrane from the Porifera Company. It is configured by means of 2 racks, each of 6 elements. Each element has a 7 m² surface, consequently the total area of the FO membranes is 84 m². **NF:** NF membranes of the Dow Chemical Company. 2 pressure containers are used with 4 NF elements with measurements of 4 x 40" in series or in parallel. Each membrane has a 7.6 m² surface, therefore 60.8 m². **T1:** is the tank which contains the concentrated DS wherein there is a stirrer for keeping the mixture uniform. **T2:** is the tank which stores the diluted DS. **1:** DS, flow of 2,000 l/h and pressure of 0.7 bar. **2:** Diluted DS, flow of 2,200 l/h and pressure of 0.2 bar. **3:** product water, flow of 200 l/h and pressure of 0.2 bar. **4:** feed water (effluent from a wastewater treatment plant), flow of 3,000 l/h and pressure of 0.9 bar. **5:** concentrate, flow of 2,800 l/h and pressure of 0.5 bar. **6:** diluted DS, flow of 2,200 l/h and pressure of 10 bar. **7:** concentrated DS (perhaps less concentrated than 1 if 3 contains a large quantity of DS). **8:** diluted DS, flow on demand and pressure of 0.2 bar. **9:** new DS, flow on demand (range of 0.6 to 4 l/h depending on the type of DS) and pressure of 0.2 bar.

### EXAMPLES

The invention will be illustrated below by means of tests carried out by the inventors which reveal the effectiveness of the product of the invention.

During the overall process, the flow of water produced by forward osmosis is maintained constant by adding the concentrated draw solution with a dosing pump in the case where the flow reduces, and adding diluted DS in the case where the flow increases. The flow of nanofiltered water will be equal to the flow produced by the forward osmosis in order to maintain the stability of the system.

The study corresponding to the invention was carried out in an automatic pilot plant which allows the operation and cleaning sequence to be carried out and the operation conditions of the system formed by FO/NF technology to be adjusted. The FO membranes used are from the Porifera Company. The NF membranes were supplied by the Dow Chemical Company.

### Example 1:

Inlet flows into the FO membrane of water to be treated of 3,000 l/h and flows of 2,000 l/h of DS were studied. The inlet water was treated waste water coming from a membrane bioreactor with variable quality according to the seasonality, with a conductivity of around 4 to 6 ms/cm and a boron concentration of 0.9 to 1.3 ppm. The permeate flow was adjusted to 200 l/h. A DS formed by sodium polyacrylate was used. The NF membranes used in this example were characterized by having a high flow. When a drop in the flow of the FO membrane (which was observed based on a reduction in the difference of flows between the inlet and the outlet of the membrane), possibly due to fouling in the FO membrane, DS was dosed in 9 in order to increase the DS concentration at the inlet of the FO membrane (1) to increase the difference of osmotic pressure between one side and the other side of the membrane and to thereby restore the desired flow. During the operation, the DS concentration was increased from 100 g/L to 200 g/L. A total of 6,900 kg/year of commercial DS was dosed on average and it was not necessary to dose diluted DS due to the fact that the production flow was below the desired flow at all times. The NF membrane responded to the concentration difference of the DS rising the pressure of the pump between 7-16 bar in order to give a permeate flow that was constant and equal to the flow of water produced by the FO. The water obtained exhibited high quality, with 0.5 ms/cm of conductivity and 0.4 ppm of boron.

### Example 2:

Inlet flows into the FO membrane of water to be treated of 3,000 l/h and flows of 2,000 L/h of DS were studied. The inlet water was treated waste water coming from a membrane bioreactor with variable quality according to the seasonality, with a conductivity of around 4 to 6 mS/cm and a boron concentration of 0.9 to 1.3 ppm. The permeate flow was adjusted to 200 L/h. A DS formed by magnesium sulfate was used. The NF membranes were characterized by having a high flow. Fouling in the membrane or significant variations in the quality of the inlet water or in the temperature were not observed, therefore, the DS concentration at the inlet of the FO membrane was maintained at around 35 g/L. A total of 6,300 kg/year of commercial DS was dosed on average and it was not necessary to dose diluted DS due to the fact that the production flow was below the desired flow at all times. The NF membrane responded to the concentration difference of the DS rising the pressure of the pump around 10 bar in order to give a permeate flow that was constant and equal to the flow of water produced by the FO. The water obtained exhibited suitable quality, with 2 mS/cm of conductivity and 0.4 ppm of boron.

### Example 3:

Inlet flows into the FO membrane of water to be treated of 3,000 L/h and flows of 2,000 L/h of DS were studied. The inlet water was treated waste water coming from a membrane bioreactor with variable quality according to the seasonality, with a conductivity of around 4 to 6 mS/cm and a boron concentration of 0.9 to 1.3 ppm. The permeate flow was adjusted to 200 L/h. A DS formed by magnesium sulfate was used. The NF membranes used were characterized in this case by exhibiting a high rejection. Fouling in the membrane or significant variations in the quality of the inlet water or in the temperature were not observed, therefore, the DS concentration at the inlet of the FO membrane was maintained at around 35 g/L. A total of approximately 3,200 kg/year of commercial DS was dosed and it was not necessary to dose diluted DS due to the fact that the production flow was below the desired flow at all times. The NF membrane responded to the concentration difference of the DS rising the pressure of the pump around 11.5 bar in order to give a permeate flow that was constant and equal to the flow of water produced by the FO. The water obtained exhibited high quality, with 0.5 mS/cm of conductivity and 0.4 ppm of boron.

## Claims

1. A method for filtering water in a forward osmosis system which comprises a step for dosing a draw solution **characterized by** measuring the flow of the draw solution or the flow of feed water at the inlet and at the outlet of the system, wherein:
i) when the difference between the flow of the draw solution or of the feed water at the inlet and at the outlet of the system is lower than between 1% and 10% of the flow, the dosing of concentrated draw solution is produced; or
ii) when the difference between the flow of the draw solution or of the feed water at the inlet and at the outlet of the system is greater than between 1% and 10% of the flow, the dosing of the diluted draw solution is produced, **characterized in that** the flow, to which the steps (i) and (ii) refer, is between 2 and 15 L/h per square meter of membrane surface.

2. The method according to claim 1, wherein the draw solution is selected from a high molecular weight polymer, fertilizers, inorganic salts and organic salts.

3. The method according to claim 2, wherein the draw solution is selected from sodium polyacrylate, magnesium sulfate, calcium disodium EDTA, magnesium disodium EDTA, calcium nitrate, magnesium nitrate, calcium acetate and magnesium acetate, sodium chloride, calcium chloride, magnesium chloride, sodium pyrophosphate, potassium formate, polyacrylamide, polyethylene glycol, polyvinyl alcohol and dextran.

4. The method according to any of claims 1 to 3, wherein the concentrated draw solution has a concentration of between 10 g/l and 500 g/l.

5. The method according to any of claims 1 to 3, wherein the diluted draw solution has a concentration of between 5 g/l and 400 g/l.

6. The method according to any of claims 1 to 5, wherein the forced osmosis system comprises a filtration membrane selected from a thin film composite (TFC) or cellulose triacetate (CTA).

7. The method according to claim 6, wherein the filtration membrane is configured as hollow fiber, flat plate or spiral.

8. The method according to any of claims 6 or 7, wherein the membrane is TFC configured as flat plate.
